# EUROPÄISCHE PATENTSCHRIFT

(11) **EP 1 426 574 B1**
(45) Veröffentlichungstag und Bekanntmachung des Hinweises auf die Patenterteilung: **25.01.2006**
(21) Anmeldenummer: 03027579.6
(22) Anmeldetag: 01.12.2003
(51) Int. Cl.: F01N 11/00, F01N 3/02, F01N 3/08, F02D 41/14, F02D 41/02, G01M 15/00, F01N 9/00

(54) **Verfahren und Vorrichtung zur Diagnose eines NOx-Speicher-Katalysators bei stehendem Fahrzeug**
Process and device for diagnosing a NOx-catalyst-absorber in a stationery vehicle
Procédé et appareil pour le diagnostique d'un catalyseur-accumulateur de NOx pour un véhicule à l'arrêt

(30) Priorität: 06.12.2002 DE 10258876
(43) Veröffentlichungstag der Anmeldung: 09.06.2004
(73) Patentinhaber: Volkswagen AG, 38436 Wolfsburg (DE)
(72) Erfinder: Lang, Axel, 38304 Wolfenbüttel (DE); Hahn, Hermann, 30175 Hannover (DE)
(74) Vertreter: Pohlmann, Bernd Michael

(56) Entgegenhaltungen:
- EP-A- 0 969 194
- DE-A- 10 003 612
- DE-A- 19 926 146
- GB-A- 2 342 597
- PATENT ABSTRACTS OF JAPAN vol. 1997, no. 07, 31. Juli 1997 (1997-07-31) & JP 09 088560 A (NISSAN MOTOR CO LTD), 31. März 1997 (1997-03-31)

## Beschreibung

Die Erfindung betrifft ein Verfahren und eine Vorrichtung zur Diagnose eines in einem Abgaskanal eines Verbrennungsmotors eines Fahrzeugs angeordneten NOx-Speicher-Katalysators bei stehendem Fahrzeug zur Prüfung der Konvertierung im Produktionsbereichbandende oder im Kundendienstbereich.

Stickoxyd (NOx)-Katalysatoren sind ein bevorzugtes Konzept, um bei einem Otto-Motor mit Direkteinspritzung eine sichere Einhaltung von Abgasgrenzwerten zu erreichen. Bei derartigen Speicherkatalysatoren wird durch thermische Alterung und Schwefelvergiftung die NOx-Speicherfähigkeit und das aktive Temperaturfenster verringert, so dass bei dem praktischen Einsatz in den Kraftfahrzeugen eine mehr oder weniger häufige Diagnose der Funktionsfähigkeit des Katalysators als erforderlich angesehen wird. Aus der DE19808382A1 ist bekannt ein Sensorsignal, das dem Zeitpunkt einer Beendigung einer Regeneration des NOx-Katalysators entspricht, zur Bestimmung des Alterungszustandes des Katalysators zu verwenden, wobei die tatsächliche Regenerationsdauer mit der in einer Motormanagementeinheit abgelegten Soll-Generationsdauer verglichen wird. Hierbei wird verwendet, dass ein NOx-Speicher-Katalysator nur eine begrenzte Menge an NOx aufnehmen kann und daher von Zeit zu Zeit regeneriert werden muss. In diesem Zusammenhang ist aus der DE 10051012A1 bekannt, während der Speicherphase eines NOx-Katalysators eine Ist-Speicherzeitdauer zu ermitteln, wenigstens einen während der Ist-Speicherzeitdauer vorliegende Motorbetriebszustand zu erfassen und die Ist-Speicherzeitdauer mit einer Referenz-Speicherzeitdauer zu vergleichen. Aus dem Verhältnis der beiden Zeitdauern wird die aktuelle Speicherfähigkeit relativ zum ursprünglichen Zustand des Speicherkatalysators abgeleitet. Als Motorbetriebszustände werden bevorzugt, die Drehzahl sowie die relative Kraftstoffmasse und/oder die dem Verbrennungsmotor zugeführte Luftmenge oder -masse erfasst. Mit einem Sensor wird der Beginn von Beschleunigungsphasen ermittelt, wobei unabhängig von dem Speicherzustand des NOx-Katalysators der Beginn jeder Beschleunigungsphase zur Regeneration des NOx-Speicher-Katalysators genutzt wird.

Die Funktionsfähigkeit eines Speicher-Katalysators bildet sich in dem zeitlichen Verlauf, der hinter dem Katalysator messbaren NOx-Konzentration ab, wie in der DE19843871A1 beschrieben ist. Es ist daher bekannt, aus dem Kurvenverlauf der NOx-Konzentration hinter dem Katalysator Parameter des Speicher- und Regenerationsverhaltens eines Speicher-Katalysators, sowie den massenstrombezogenen Konvertierungsgrad zu ermitteln. Aus der DE19946628A1 ist ferner ein Diagnoseverfahren bekannt, bei dem der Speicher-Katalysator auf eine Mindesttemperatur aufgeheizt wird. Zur Einleitung des Aufheizens wird durch eine Sekundärluftpumpe der Sauerstoffanteil am Abgas durch Einspeisung eines zusätzlichen Luftvolumens unmittelbar nach der Verbrennungskraftmaschine erhöht. Befindet sich die Verbrennungskraftmaschine im Fettbetrieb, erfolgt damit eine vorgelagerte exotherme Oxidation der Reduktionsmittel direkt im oberen Abgaskanal oder gegebenenfalls an einem vorhanden Vorkatalysator. Eine Diagnose erfolgt erst nach Abschalten der Sekundärluftpumpe.

Ferner ist aus der DE19928681A1 für die Wartung eines Kraftfahrzeugs eine Anordnung zur Messung und Auswertung von Wartungswerten bekannt, bei der ein Diagnosestecker mit einer Diagnosesteckdose des Kraftfahrzeugs gekoppelt wird. Über eine Sonde werden Abgaswerte des Kraftfahrzeugs gemessen. Hierzu wird die Sonde in den Auspuff des Kraftfahrzeugs eingeführt und dort befestigt. Ein Verfahren mit einem werkstattgerechten Ablauf zur Überprüfung der Funktionsfähigkeit eines Abgaskatalysators ist auch aus der DE3935381A1 bekannt, bei der ein Abgaskatalysator auf eine Mindesttemperatur erwärmt wird. Aus einem Gasvorratsbehälter wird Stickoxyd dem heißen Abgas in der Abgasleitung zugesetzt. Eine Abgasmesssonde ist in dem Auspuffrohr der Abgasleitung angeordnet, die eine Gasprobe über eine Verbindungsleitung einem Gasanalysator zuführt.

Es ist darüber hinaus aus der DE3443649C2 bekannt die Katalysatorfunktion bei einem mit einer Lambdasonde ausgerüsteten Kraftfahrzeug mit Otto-Motor bei konstanten Betriebsbedingungen zu überprüfen und dabei die Prüfdrehzahl so hoch zu legen, dass die Betriebstemperatur des Katalysators sicher erreicht wird.

Ferner ist auf der DE19926146A1 eine Motorprüfstandsuntersuchung an einem NOx-Speicher-Katalysator bekannt bei dem vor der jeweiligen Messung der NOx-Konzentration beziehungsweise der NOx-Emissionen die Verbrennungskraftmaschine zur Gewährleistung einer vollständigen NOx-Regeneration 60 Sekunden lang in einem Arbeitsmodus mit Lambda = 0,9 bei einer Abgastemperatur vor dem NOx-Speicher-Katalysator von ca. 350° C geschaltet wird. Nach der NOx-Regeneration erfolgt ein Wechsel in einen Betriebspunkt mit magerem Arbeitsmodus mit Lambda = 2,2 wobei unmittelbar nach Beginn dieses Arbeitsmodus die NOx-Konzentration beziehungsweise die NOx-Emission erfasst wird. Die Verbrennungskraftmaschine ist dabei derart eingestellt, dass eine Konzentration des NOx unmittelbar hinter der Verbrennungskraftmaschine bei ca. 1250 ppm liegt. Die gemessene NOx-Konzentration wird mit einer NOx-Sollkonzentration verglichen und daraus auf den Katalysatorzustand rückgeschlossen.

Mit dem aus dem Stand der Technik bekannten Verfahren zur Diagnose von NOx-Katalysatoren ist es zwar in einem gewissen Umfang möglich, geschädigte Katalysatoren zu identifizieren. Jedoch hat sich herausgestellt, dass häufig auch geschädigte Katalysatoren als funktionsfähig diagnostiziert wurden.

Aufgabe der vorliegenden Erfindung ist daher die Schaffung eines Verfahrens und einer Vorrichtung zur Durchführung des Verfahrens, mit der die Konvertierung von NOx-Speicher-Katalysatoren im Werkstatt- und im Fahrzeugproduktionsbereich geprüft und mit der die Genauigkeit und Sicherheit einer Diagnose von NOx-Speicher-Katalysatoren erhöht werden kann.

Erfindungsgemäß wird die angegebene Aufgabe durch die Merkmale der unabhängigen Patentansprüche gelöst.

Erfindungsgemäß wird durch die Erhöhung des NOx-Massenstroms des Abgases berücksichtigt, dass auch geschädigte Speicher-Katalysatoren bei sehr niedriger NOx-Beaufschlagung über längere Zeit NOx einlagern können, ohne dass es zu einem Durchbruch von NOx kommt. Umgekehrt wird mit einer höheren Beaufschlagung des Speicher-Katalysators mit NOx die Trennschärfe der Diagnose verbessert.

Da der NOx-Abgasmassenstrom von Last und Drehzahl des Motors abhängt, wird gemäß einer bevorzugten Ausführungsform der Erfindung durch eine Last- und/oder Drehzahlerhöhung die Beaufschlagung des Katalysators mit NOx durch eine Lasterhöhung und/oder eine Drehzahlerhöhung vergrößert, bis ein vorgegebener Wert des NOx-Massenstroms erreicht ist.

Ein Vorteil der Erfindung ist eine einfache und genaue Prüfung der Konvertierungsteistung von NOx-Speicher-Katalysatoren im Werkstatt- und im Fahrzeugproduktionsbereich.

Erfindungsgemäß kann die erhöhte NOx-Beaufschlagung bis zum Ende der Magerbetriebsphase erhöht bleiben.

Wenn nach einer bevorzugten Ausführungsform der Erfindung der NOx-Referenzzustand durch Beaufschlagung des Katalysators mit Abgas eines vorgegebenen Lambdawertes von Lambda < 1 erfolgt, bevorzugt Lambda < 0,9 insbesondere Lambda < 0,7 bis 0,8 ist eine erhöhte Reproduzierbarkeit der Messung erreichbar. Bevorzugt ist vorgesehen, die Beaufschlagung des Katalysators mit einem Abgas mit Lambda < 1 bei einer niedrigeren Abbruchstelle zu beenden als sie im üblichen Fahrbetrieb gewählt wird, um damit eine verbesserte Ausräumung des NOx aus dem NOx-Speicher zu gewährleisten.

Eine gegebenenfalls vorhandene Schwefelvergiftung des Katalysators wird berücksichtigt, wenn ein SOx-Referenzzustand durch eine Desulfatierung bei einem Wert Lambda < = 1 und einer Desulfatierungstemperatur, vorzugsweise T > 550° C eingestellt wird.

Wenn die Maßnahme zur Erhöhung der NOx-Beaufschlagung des Katalysators vor Einstellung des NOx- oder SOx-Referenzzustandes des Katalysators erfolgt, kann damit das Regenerationsintervall relativ kurz gehalten werden. Es kann jedoch die Maßnahme zur Erhöhung der NOx-Beaufschlagung auch nach Einstellung des NOx- bzw. SOx-Referenzzustandes erfolgen.

Die Magerbetriebsphase erfolgt vorzugsweise mit einem vorgegebenen Betriebsparameterprofil. Bevorzugt werden Betriebsparameter, die für einen Normalbetrieb typisch sind gewählt, da hiermit eine erhöhte Trennschärfe der Diagnose erreicht werden kann. Insbesondere werden die Werte einer Abgasrückführrate, die sich auf die NOx-Rohemission auswirken, wie im Normalbetrieb gewählt.

Die Magerbetriebsphase wird so lange beibehalten, bis ein verwertbares NOx-Beladungszeitintervall vorliegt. Das Beladungszeitintervall kann durch eine Mindestbeladungszeit, beispielsweise zwischen 40 und 60 Sekunden, gegeben sein. Das NOx-Beladungszeitintervall kann jedoch auch in Abhängigkeit von anderen Parametern, beispielsweise der nach dem NOx-Katalysator ermittelten NOx-Konzentration oder der akkumulierten NOx-Masse bestimmt werden.

Als Abgaskenngröße wird der Lambdawert des Abgases oder die NOx-Konzentration stromab des Speicher-Katalysators gemessen.

Zur Ermittlung des NOx-Katalysatorzustandswerts in Abhängigkeit von der Abgaskenngröße wird das mittels des Sensors gemessene tatsächliche Verhalten mit einem modellierten Verhalten des Speicher-Katalysators verglichen. Bevorzugt wird eine modellierte oder gemessene NOx-Rohemission und die nach dem Speicher-Katalysator gemessene NOx-Konzentration oder der NOx-Massenstrom zur Bestimmung der in der Magerbetriebsphase im NOx-Katalysator eingelagerten NOx-Menge herangezogen.

Die erfindungsgemäße Vorrichtung zur Durchführung des erfindungsgemäßen Verfahrens beinhaltet eine Testeinrichtung, mittels der die erfindungsgemäßen Verfahrensschritte durchgeführt werden. Die Testeinrichtung kann separat ausgebildet sein oder als Teilsystem der Motorsteuerung.

Zur Messung der Abgaskenngröße ist zumindest ein für den Normalbetrieb im Fahrzeug serienmäßig verbauter Sensor vorgesehen. Dies ermöglicht eine besonders einfache Durchführung der Diagnose.

Zur Messung der Abgaskenngröße ist gemäß einer weiteren Ausführungsform zumindest ein nicht für den Normalbetrieb im Fahrzeug serienmäßig verbauter Sensor vorgesehen, mit dem eine besondere Anpassung an die Testbedingungen möglich ist. Im Folgenden wird die Erfindung unter Verwendung von Zeichnungen anhand eines Ausführungsbeispiels näher erläutert, aus dem sich auch unabhängig von ihrer Zusammenfassung in den Ansprüchen weitere Vorteile und Merkmale der Erfindung ergeben.

In den Zeichnungen zeigen in schematischer Darstellung:
- Figur 1: eine Brennkraftmaschine mit zugeordneter Abgasanlage
- Figur 2: ein Ablaufdiagramm für ein erfindungsgemäßes Verfahren

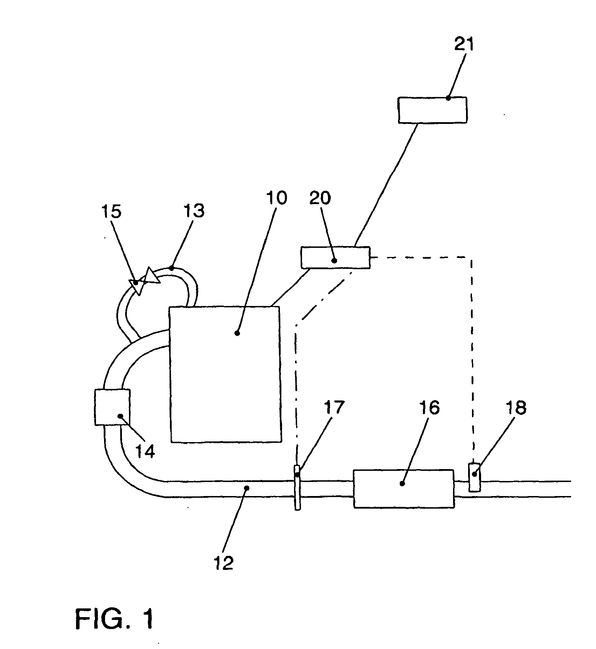

Figur 1 zeigt in schematischer Darstellung eine Verbrennungsmaschine 10, beispielsweise ein magerlauffähiger Otto-Motor oder eine Dieselbrennkraftmaschine, mit einer Abgasanlage 12 und einem Motorsteuergerät 20, vorzugsweise zum Betrieb eines Kraftfahrzeugs. Die Abgasanlage 12 weist stromab des Verbrennungsmotors 10 einen optionalen Vorkatalysator 14 und einen NOx-Speicher-Katalysator 16 zur Konvertierung von schädlichen oder unerwünschten Komponenten des Abgases in andere Komponenten auf. Ferner ist eine äußere Abgas-Rückführeinrichtung 13 mit einem Abgas-Rückführventil 15 vorgesehen. Stromab des Vorkatalysators 14 und stromaufwärts des NOx-Speicher-Katalysators 16 ist eine Lambdasonde 17 im Abgaskanal 12 angeordnet. Hierbei handelt es sich bevorzugt um eine stetige Lambdasonde, jedoch kann auch eine binäre Lambdasonde vorgesehen sein. Stromab des Speicher-Katalysators 16 ist ein Sensor 18 angeordnet. Der Sensor 18 ist bevorzugt als NOx-Sensor oder als binäre Lambdasonde ausgeführt.

Das Motorsteuergerät 20 erfasst in an sich bekannter Weise auch über nicht dargestellte weitere Sensoren Betriebsparameter der Verbrennungskraftmaschine 10, wie beispielsweise die Drosselklappenstellung, Abgasrückführrate, zum Zeitpunkt Einspritzzeitpunkt vom Vor-Haupt-Nacheinspritzungen, Einspritzdruck gegebenenfalls Tumble-Klappenstellung, Ladedruck, Phasensteller der Nockenwelle, Fahrpedalstellung, Fahrgeschwindigkeit sowie Motorlast und Drehzahl. Über nicht dargestellte Stellglieder können Betriebsparameter des Verbrennungsmotors 10 gegebenenfalls von dem Motorsteuergerät 20 beeinflusst werden. Ferner ist eine Testeinrichtung 21 vorgesehen, über die Betriebsparameter des Verbrennungsmotors zur Durchführung des erfindungsgemäßen Verfahrens eingestellt werden. Die Testeinrichtung 21 kann auch Bestandteil des Motorsteuergeräts 20 sein. Wie an sich bereits aus dem Stand der Technik bekannt ist, kann die Testeinrichtung 21 beispielsweise über einen Diagnosetester als Schnittstelle mit dem Motorsteuergerät 20 verbunden sein.

Wenn der Verbrennungsmotor 10 über ein On-Board-Diagnose-System für den NOx-Speicher-Katalysator 16 im Normalbetrieb verfügt, werden üblicherweise Fehlereinträge in einen Speicher im Motorsteuergerät 20 vorgenommen, die während des Betriebs des Verbrennungsmotors 10 identifiziert wurden. In einem solchen Fall kann erfindungsgemäß beispielsweise im Werkstattbereich/Kundendienst eine On-Board-Diagnose bei stehendem Fahrzeug in der Werkstatt zur Verifikation erfolgen.

Ferner besteht nach einer Reparatur und anschließender Löschung von gegebenenfalls gespeicherten Fehlereinträgen Bedarf einen sogenannten Readynesscode zu erzeugen, der über eine geeignete Schnittstelle ausgegeben wird. Der Readynesscode beinhaltet die Prüfergebnisse von wesentlichen Komponenten des Motormanagements wie beispielsweise Katalysator, Abgasrückführung, Lambdasonde, Sekundärluftzuführung. Hierbei werden mit Anreizen Prüfprozeduren für die einzelnen Komponenten erzeugt und somit angezeigt, ob das Gesamtsystem korrekt arbeitet.

Bei der Herstellung eines Fahrzeugs besteht spätestens am Bandende Bedarf zur Anwendung von Prüfroutinen, um sämtliche Komponenten des Verbrennungsmotors und der Motorperipherie zu testen und damit sicherzustellen, dass ein Motorsystem mit vorgeschriebener Qualitätscharakteristik die Produktion verlässt.

Bei der Durchführung von derartigen Diagnosen wird bei einem stehenden Fahrzeug bevorzugt ein definierter Betriebspunkt eingestellt. Über das Motorsteuergerät 20 werden Betriebsparameter entsprechend vorgegebener Prüfprofile eingestellt.

Die Erfindung geht von der Erkenntnis aus, dass die Trennschärfe einer Diagnose eines NOx-Speicher-Katalysators erhöht werden kann, wenn während der Diagnose eine Mindest-NOx-Beaufschlagung des Speicher-Katalysators gewährleistet ist. Hiermit wird vermieden, dass geschädigte Speicherkatalysatoren, die unter Umständen bei niedriger NOx-Beaufschlagung über längere Zeit NOx ohne Durchbruch einlagern können, als ungeschädigt diagnostiziert werden.

Da die Diagnose bei stehendem Fahrzeug erfolgt, ist eine derartige höhere NOx-Beaufschlagung des Katalysators im Unterschied zu einer Diagnose bei Fahrbetrieb relativ einfach möglich. Ein Maß für die NOx-Beaufschlagung des Katalysators ist der NOx-Massenstrom. Der NOx-Massenstrom ist proportional der Raumgeschwindigkeit des Abgases sowie der NOx-Konzentration im Abgas. Bei konstanter Motorlast kann durch Anhebung der Drehzahl der Massenstrom erhöht werden. Bevorzugt wird bei dem erfindungsgemäßen Verfahren ein Kennfeld verwendet bei dem in Abhängigkeit von Motorlast und Drehzahl, der in den NOx-Katalysator eingehende NOx-Massenstrom abgelegt wird. Ferner kann der NOx-Massenstrom auch aus Motormodellen abgeleitet oder mittels eines stromaufwärts des NOx-Katalysators angeordneten NOx-Sensors sowie aus Informationen über den Abgas-Massenstrom bestimmt werden. Die Betriebsparameter des Verbrennungsmotors, insbesondere Motorlast und Drehzahl werden erfindungsgemäß derart gewählt, dass der NOx-Massenstrom einen vorgegebenen Wert überschreitet oder in einem vorgegebenen Intervall liegt, bei dem eine ausreichend hohe Trennschärfe der Diagnose sichergestellt ist.

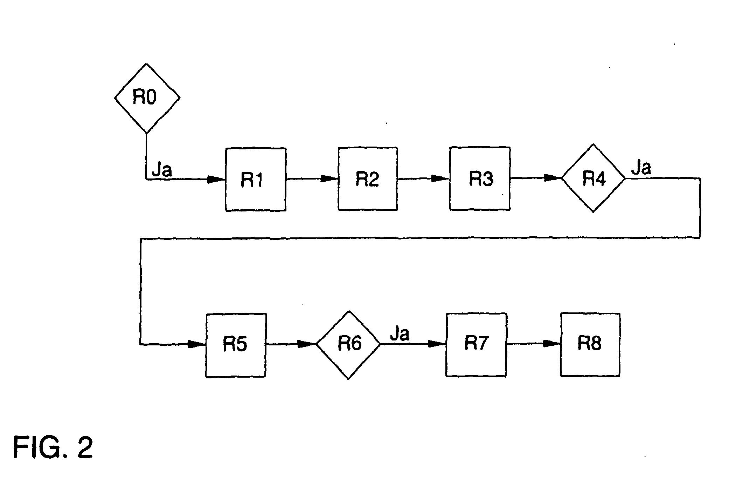

In dem Ablaufdiagramm Figur 2 ist der prinzipielle Ablauf einer erfindungsgemäßen Diagnose dargestellt. Zur Vereinfachung sind an Entscheidungspunkten (Rauten) jeweils nur die bei einer Ja-Entscheidung zu verfolgenden Abläufe dargestellt. Im Entscheidungspunkt R0 erfolgt eine Anforderung einer Prüfprozedur für die NOx-Speicheraktivität, vorzugsweise über eine Diagnoseschnittstelle zwischen der Testeinrichtung 21 und der Motorsteuerung 20. Im Schritt R1 wird der Katalysator auf eine Temperatur in einem für die NOx-Speicherwirkung repräsentativen Bereich gebracht. Beispielsweise zwischen 200 und 600°C, bevorzugt 300 bis 450°C je nach Katalysatortyp und Temperatur. Ein noch nicht auf eine ausreichende Temperatur erwärmter Katalysator kann beispielsweise durch sogenanntes Katalysatorheizen mit einer erhöhten Motordrehzahl und einem späten Zündwinkel aufgeheizt werden. Im Schritt R2 wird die NOx-Beaufschlagung des Katalysators auf einen vorgegeben Schwellwert oder in ein vorgegebenes Testintervall eingestellt. Vorzugsweise geschieht das durch Anhebung der Drehzahl zur Erhöhung des NOx-Massenstroms beziehungsweise der Raumgeschwindigkeit bei definierter Motorlast. Im Schritt R3 wird ein NOx-Referenzzustand des NOx-Speicher-Katalysators zur Messung der NOx-Konvertierung eingestellt. Hierzu wird der NOx-Katalysator mit Abgas eines vorgegebenen Lambdawerts < 1 beaufschlagt. Bevorzugt ist hierbei ein Lambdawert von 0,7 bis 0,8. Dabei wird gegebenenfalls eingelagertes NOx aus dem Katalysator entfernt. Die Regeneration wird beendet wenn ein Durchbruch von Abgas mit einem Lambdawert < 1 hinter dem NOx-Speicher-Katalysator durch die stromabwärts des Katalysators 16 angeordnete Lambdasonde 18 ermittelt wird. Ein Durchbruch wird dann festgestellt, wenn das Abgas stromab des Katalysators 16 einen Lambdawert kleiner als ein Lambdaschwellwert aufweist. Bevorzugt wird hier ein Schwellwert gewählt, der mehr im Fetten liegt als im üblichen Fahrbetrieb, beispielsweise Lambda 0,9, um eine vollständige Entfernung von NOx aus dem Katalysator 16 zu gewährleisten. Für den Fall, dass eine Desulfatierung des Katalysators 16 erfolgen soll, also ein SOx-Referenzzustand eingestellt werden soll, wird bei einem Lambdawert < = 1 und einer Temperatur T > 550°C gearbeitet. Die Entscheidung für eine Beendigung der Regerationsmaßnahme erfolgt im Schritt R4.

Im Schritt R5 erfolgt in einer Magerbetriebsphase eine Zurverfügungstellung von NOx aus dem Verbrennungsprozess des Verbrennungsmotors für ein vorgegebenes NOx-Beladungszeitintervall. Während der Magerbetriebsphase wird der Verbrennungsmotor vorzugsweise mit einem vorgegebenen Betriebsparameterprofil ähnlich denen des normalen Fahrbetriebs betrieben. Insbesondere werden Werte dabei von Betriebsparametern, die sich stark auf die NOx-Rohemission auswirken, überwacht. Das NOx-Beladungszeitintervall kann eine Mindestbeladungszeit sein, beispielsweise 40 bis 60 Sekunden. Ferner kann das NOx-Beladungszeitintervall in Abhängigkeit von einer vorgegebenen kumulierten Masse NOx stromab des Katalysators 16 oder einer NOx-Konzentration stromab des Katalysators 16 gewählt werden. Ziel dieser Magerbetriebsphase ist die Ermittlung von genügend Daten um einen NOx-Katalysatorzustandswert in Abhängigkeit von den Messwerten zu berechnen. Im Schritt R6 wird das Vorliegen eines verwertbaren NOx-Beladungszeitintervalls festgestellt, wonach im Schritt R7 der NOx-Katalysatorzustandswert berechnet wird. Bevorzugt wird dabei die stromab des NOx-Katalysators 16 gemessene NOx-Konzentration integriert und mit einer für einen ungeschädigten NOx-Speicherkatalysator modellierten Sollkenngröße verglichen. Vorzugsweise kann das Verhältnis der beiden Größen berechnet werden. Daneben bestehen weitere an sich aus dem Stand der Technik bereits bekannten Möglichkeiten, einen Zustandswert des NOx-Katalysators im Schritt R7 zu berechnen, wobei vorzugsweise entweder von einem NOx-Schlupf stromab des NOx-Katalysators oder von Desorptionsverhalten während einer Regenerationsphase ausgegangen werden kann.

Nach Berechnung des NOx-Zustandswerts in Schritt R7 erfolgt eine Ausgabe des ermittelten Werts in R8. Falls sich dabei aus den ermittelten Werten oder aus bereits vorher vorliegenden Daten Hinweise auf eine Schwefelvergiftung des Katalysators ergeben, kann gegebenenfalls in einem zweiten Durchlauf noch eine Desulfatierung in Schritt R3 erfolgen.

Im Unterschied zu der oben angegebenen Reihenfolge der Schritte R2 und R3 ist bei einer weiteren Ausführungsform der Erfindung vorgesehen, zunächst einen definierten NOx-beziehungsweise SOx-Referenzzustsand des Katalysators einzustellen und anschließend die NOx-Beaufschlagung des Katalysators zu erhöhen, das heißt die Schritte R2 und R3 zu vertauschen. Allerdings ist in diesem Fall von Nachteil, dass die Einstellung des Referenzzustandes bei niedrigerer Drehzahl aufgrund des niedrigeren Absatzdurchsatzes länger in Anspruch nimmt als bei einer höheren Drehzahl.

Für eine noch genauere Diagnose ist es vorteilhaft, wenn der NOx-Massenstrom entsprechend einem vorgegebenen zeitlichen Profil während der Schritte R2 bis R6 variiert wird. Zur Vereinfachung kann jedoch auch mit einer im Wesentlichen konstanten Raumgeschwindigkeit gearbeitet werden.

Die Testeinrichtung kann als Teilsystem der Motorsteuerung ausgebildet oder als separate Baugruppe vorgesehen sein. Zur Messung der Abgaskenngrößen kann zumindest ein für den Normalbetrieb serienmäßig im Fahrzeug vorhandener Sensor vorgesehen sein. Bei einer weiteren Ausbildungsform der Erfindung ist zur Messung der Abgaskenngrößen zumindest ein nicht für den Normalbetrieb serienmäßig im Fahrzeug verbauter Sensor vorgesehen.

Die Erfindung ermöglicht insbesondere eine einfache und genaue Prüfung der Konvertierungsleistung eines NOx-Speicher-Katalysators im Produktionsbereich oder im Kundendienstbereich.
- 10: Verbrennungsmotor
- 12: Abgaskanal
- 13: AGR
- 14: Vorkatalysator
- 15: AGR-Ventil
- 16: NOx-Speicher-Katalysator
- 17: Lambdasonde
- 18: Sensor, NOx-Sensor, Lambdasonde
- 20: Motorsteuerung
- 21: Testeinrichtung

## Patentansprüche

1. Verfahren zur Diagnose eines in einem Abgaskanal eines Verbrennungsmotors eines Fahrzeugs angeordneten NOx-Speicher-Katalysators bei stehendem Fahrzeug, wobei folgende Schritte vorgesehen sind:
- Einstellung der Katalysatortemperatur auf einen Wert in einem für eine NOx-Speicherung repräsentativen Bereich
- Einstellung eines NOx-Referenzzustandes des Speicher-Katalysators zur Messung einer NOx-Magerkonvertierung, wobei der Speicher-Katalysator zumindest temporär mit Abgas eines vorgegebenen Lambdawerts < 1, bevorzugt Lambda < 0,9, besonders bevorzugt zwischen 0,7 und 0,8 beaufschlagt wird
- Beaufschlagung des NOx-Speicher-Katalysators mit Abgas mit einem NOx-Massenstrom größer als ein vorgegebener Schwellwert
- Durchführung einer Magerbetriebsphase
- Messung einer für die NOx-Konvertierung charakteristischen Abgaskenngröße mittels eines stromab des Speicher-Katalysators angeordneten Sensors
- Ermittlung eines Speicher-Katalysator-Zustandswerts in Abhängigkeit von den Messwerten der Abgaskenngrüße
- Ausgabe des Zustandswertes über Diagnoseschnittstelle
- Ausgabe des Zustandswertes

2. Verfahren nach Anspruch 1, **dadurch gekennzeichnet, dass** der Wert der NOx-Beaufschlagung des Speicher-Katalysators aus einem Kennfeld mit der Motordrehzahl und der Motorlast als Eingangsgrößen bestimmt wird.

3. Verfahren nach Anspruch 1 oder 2, **dadurch gekennzeichnet, dass** die Beaufschlagung des Speicher-Katalysators mit einem Lambdawert <1 spätestens bei einem NOx-Durchbruch stromab des Speicher-Katalysators abgebrochen wird.

4. Verfahren nach zumindest einem der vorhergehenden Ansprüche, **dadurch gekennzeichnet, dass** die Einstellung des NOx-Referenzzustands zeitlich vor Beaufschlagung des Speicher-Katalysators mit dem vorgegebenen NOx-Massenstrom erfolgt.

5. Verfahren nach zumindest einem der Ansprüche 1 bis 3, **dadurch gekennzeichnet, dass** die Einstellung des NOx-Referenzzustandes zeitlich nach Beaufschlagung des Speicher-Katalysators mit dem vorgegebenen NOx-Massenstrom erfolgt.

6. Verfahren nach zumindest einem der vorhergehenden Ansprüche, **dadurch gekennzeichnet, dass** der Verbrennungsmotor während der Magerbetriebsphase mit einem vorgegebenen Betriebsparameter-Profil betrieben wird, wobei die Betriebsparameter zumindest einen der folgenden Parameter umfassen: Drosselklappenstellung, Abgasrückführungsrate, Zündzeitpunkt, Einspritzzeitpunkt von Vor-Haupt-Nacheinspritzungen, Einspritzdruck, gegebenenfalls Tumble-Klappenstellung, Ladedruck, Phasensteller der Nockenwelle, Drehzahl, Fahrpedalstellung, Last, Fahrgeschwindigkeit.

7. Verfahren nach Anspruch 6, **dadurch gekennzeichnet, dass** die Werte des vorgegebenen Betriebsparameterprofils im wesentlichen denen eines Normalbetriebs des Fahrzeugs entsprechen.

8. Verfahren nach zumindest einem der vorhergehenden Ansprüche, **dadurch gekennzeichnet, dass** die Magerbetriebsphase nach Beendigung eines NOx-Beladungszeitintervalls des Speicher-Katalysators beendet wird.

9. Verfahren nach Anspruch 8, **dadurch gekennzeichnet, dass** das Beladungszeitintervall durch eine vorgegebene feste Beladungszeit gegeben ist.

10. Verfahren nach Anspruch 9, **dadurch gekennzeichnet, dass** das NOx-Beladungszeitintervall in Abhängigkeit von dem Wert einer NOx-Konzentration stromab des Speicher-Katalysators gewählt wird.

11. Verfahren nach zumindest einem der vorhergehenden Ansprüche, **dadurch gekennzeichnet, dass** als Abgaskenngröße ein Lambdawert oder eine NOx-Konzentration stromab des Speicher-Katalysators gewählt ist.

12. Verfahren nach zumindest einem der vorhergehenden Ansprüche, **dadurch gekennzeichnet, dass** der NOx-Referenzzustand in Abhängigkeit von einer NOx-Rohemission und einer in den Speicher-Katalysator eingelagerten NOx-Menge bestimmt wird.

13. Verfahren nach zumindest einem der vorhergehenden Ansprüche, **dadurch gekennzeichnet, dass** zur Berücksichtigung einer Schwefelvergiftung des Katalysators ein SOx-Referenzzustand bei einem Lambdawert < 1 und einer Desulfatierungs-temperatur, vorzugsweise T > 550 Grad Celsius eingestellt wird.

14. Verfahren nach zumindest einem der vorhergehenden Ansprüche, **dadurch gekennzeichnet, dass** die Durchführung der Diagnoseschritte als On-Board-Diagnose mittels in einem Motorsteuergerät abgespeicherter Prozeduren erfolgt.

15. Vorrichtung zur Durchführung einer Diagnose eines in einem Abgaskanal eines Verbrennungsmotors eines Fahrzeugs angeordneten NOx-Speicher-Katalysators bei stehendem Fahrzeug, **dadurch gekennzeichnet, dass** eine Testeinrichtung vorgesehen ist mit Mitteln zur
- Einstellung der Katalysatortemperatur auf einen Wert in einem für eine NOx-Speicherung repräsentativen Bereich
- Einstellung eines NOx-Referenzzustandes des Speicher-Katalysators zur Messung einer NOx-Magerkonvertierung, wobei der Speicher-Katalysator zumindest temporär mit Abgas eines vorgegebenen Lambdawerts < 1, bevorzugt Lambda < 0,9, besonders bevorzugt zwischen 0,7 und 0,8 beaufschlagt wird
- Beaufschlagung des NOx-Speicher-Katalysators mit Abgas mit einem NOx-Massenstrom größer als ein vorgegebener Schwellwert
- Durchführung einer Magerbetriebsphase
- Messung einer für die NOx-Konvertierung charakteristischen Abgaskenngröße mittels eines stromab des Speicher-Katalysators angeordneten Sensors
- Ermittlung eines Speicher-Katalysator-Zustandswerts in Abhängigkeit von den Messwerten der Abgaskenngröße
- Ausgabe des Zustandswertes über Diagnoseschnittstelle.

16. Vorrichtung nach Anspruch 15, **dadurch gekennzeichnet, dass** die Testeinrichtung ein Teilsystem einer Motorsteuerung des Verbrennungsmotors ist.

17. Vorrichtung nach Anspruch 15 oder 16, **dadurch gekennzeichnet, dass** zur Messung der Abgaskenngrößen zumindest ein für den Normalbetrieb im Fahrzeug serienmäßig verbauter Sensor vorgesehen ist.

18. Vorrichtung nach zumindest einem der Ansprüche 16 bis 17, **dadurch gekennzeichnet, dass** zur Messung der Abgaskenngröße zumindest ein nicht für den Normalbetrieb im Fahrzeug serienmäßig verbauter Sensor vorgesehen ist.

19. Vorrichtung nach zumindest einem der Ansprüche 16 bis 18, **dadurch gekennzeichnet, dass** zur Messung eines Lambdawertes des Abgases zumindest ein stromaufwärts des Speicher-Katalysators verbaute Lambdasonde, vorzugsweise eine binäre oder eine Breitband-Lambdasonde vorgesehen ist.

20. Vorrichtung nach zumindest einem der Ansprüche 16 bis 19, **dadurch gekennzeichnet, dass** zur Messung der NOx-Konzentration stromabwärts des Speicher-Katalysators ein NOx-Sensor vorgesehen ist.

## Claims

1. Method for diagnosing an NOx storage catalytic converter arranged in an exhaust pipe of an internal combustion engine of a vehicle when the vehicle is stationary, in which the following steps are provided:
- setting the catalytic converter temperature to a value in a range which is representative for NOx storage
- setting an NOx reference status in the storage catalytic converter for measuring the NOx lean conversion, with the storage catalytic converter at least temporarily being exposed to exhaust gas with a predetermined lambda value of < 1, preferably lambda < 0.9, particularly preferably between 0.7 and 0.8
- exposing the NOx storage catalytic converter to exhaust gas with a mass flow of NOx which is higher than a predetermined threshold value
- carrying out a lean-burn operating phase
- measuring an exhaust gas characteristic variable for the NOx conversion by means of a sensor arranged downstream of the storage catalytic converter
- determining a storage catalytic converter status parameter as a function of the measured values for the exhaust gas characteristic variable
- outputting the status parameter via diagnosis interface
- outputting the status parameter.

2. Method according to Claim 1, **characterized in that** the level of exposure of the storage catalytic converter to NOx is determined from an engine map with the engine speed and engine load as input variables.

3. Method according to Claim 1 or 2, **characterized in that** the exposure of the storage catalytic converter to a lambda value of < 1 is terminated at the latest when NOx breaks through downstream of the storage catalytic converter.

4. Method according to at least one of the preceding claims, **characterized in that** the setting of the NOx reference status takes place before the storage catalytic converter is exposed to the predetermined mass flow of NOx.

5. Method according to at least one of Claims 1 to 3, **characterized in that** the setting of the NOx reference status takes place after the storage catalytic converter has been exposed to the predetermined mass flow of NOx.

6. Method according to at least one of the preceding claims, **characterized in that**, during the lean-burn operating phase, the internal combustion engine is operated with a predetermined profile of operating parameters, the operating parameters comprising at least one of the following parameters: throttle valve position, exhaust gas recirculation rate, ignition point, injection point of pre-injection/main injection/afterinjection, injection pressure, optional tumble valve position, boost pressure, phase adjustment of the camshaft, engine speed, accelerator pedal position, load, driving speed.

7. Method according to Claim 6, **characterized in that** the values for the predetermined operating parameter profiles substantially correspond to those of normal operation of the vehicle.

8. Method according to at least one of the preceding claims, **characterized in that** the lean-burn operating phase is terminated after an NOx loading period of the storage catalytic converter has ended.

9. Method according to Claim 8, **characterized in that** the loading period is given by a predetermined, fixed loading time.

10. Method according to Claim 9, **characterized in that** the NOx loading period is selected as a function of the value of an NOx concentration downstream of the storage catalytic converter.

11. Method according to at least one of the preceding claims, **characterized in that** the exhaust gas characteristic variable selected is a lambda value or an NOx concentration downstream of the storage catalytic converter.

12. Method according to at least one of the preceding claims, **characterized in that** the NOx reference status is determined as a function of an untreated NOx emission and a quantity of NOx accumulated in the storage catalytic converter.

13. Method according to at least one of the preceding claims, **characterized in that**, to take account of sulphur poisoning of the catalytic converter, an SOx reference status at a lambda value < 1 and a desulphating temperature, preferably T > 550 degrees Celsius, is set.

14. Method according to at least one of the preceding claims, **characterized in that** the diagnosis steps are carried out as on-board diagnosis by means of procedures stored in an engine control unit.

15. Apparatus for carrying out diagnosis of an NOx storage catalytic converter arranged in an exhaust pipe of an internal combustion engine of a vehicle when the vehicle is stationary, **characterized in that** a test device is provided, having means for
- setting the catalytic converter temperature to a value in a range which is representative for NOx storage
- setting an NOx reference status in the storage catalytic converter for measuring the NOx lean conversion, with the storage catalytic converter at least temporarily being exposed to exhaust gas with a predetermined lambda value of < 1, preferably lambda < 0.9, particularly preferably between 0.7 and 0.8
- exposing the NOx storage catalytic converter to exhaust gas with a mass flow of NOx which is higher than a predetermined threshold value
- carrying out a lean-burn operating phase
- measuring an exhaust gas characteristic variable for the NOx conversion by means of a sensor arranged downstream of the storage catalytic converter
- determining a storage catalytic converter status parameter as a function of the measured values for the exhaust gas characteristic variable
- outputting the status parameter via diagnosis interface.

16. Apparatus according to Claim 15, **characterized in that** the test device is a subsystem of an engine control unit of the internal combustion engine.

17. Apparatus according to Claim 15 or 16, **characterized in that** at least one sensor which is installed in series-production vehicles for normal operation is provided for measuring the exhaust gas characteristic variables.

18. Apparatus according to at least one of Claims 16 to 17, **characterized in that** at least one sensor which is not installed in series-production vehicles for normal operation is provided for measuring the exhaust gas characteristic variable.

19. Apparatus according to at least one of Claims 16 to 18, **characterized in that** at least one lambda sensor which is installed upstream of the storage catalytic converter, preferably a binary or a wide-band lambda sensor, is provided for measuring the lambda value of the exhaust gas.

20. Apparatus according to at least one of Claims 16 to 19, **characterized in that** an NOx sensor is provided for measuring the NOx concentration downstream of the storage catalytic converter.

## Revendications

1. Procédé pour exécuter le diagnostic d'un catalyseur-accumulateur de NOₓ agencé dans le canal de gaz d'échappement du moteur à combustion d'un véhicule pendant que le véhicule est à l'arrêt, lequel procédé prévoyant les étapes qui consistent à :
- établir la température du catalyseur à une valeur qui se trouve dans une plage représentative de l'accumulation de NOₓ,
- établir un état de référence en NOₓ du catalyseur-accumulateur pour mesurer la conversion du NOₓ en conditions pauvres, le catalyseur-accumulateur étant au moins temporairement alimenté en gaz d'échappement dont la valeur lambda prédéfinie est < 1, de préférence lambda < 0,9 et de façon particulièrement préférée entre 0,7 et 0,8,
- délivrer au catalyseur-accumulateur de NOₓ du gaz d'échappement à un débit massique de NOₓ supérieur à un seuil prédéfini,
- exécuter une phase de fonctionnement en conditions pauvres,
- au moyen d'un détecteur agencé en aval du catalyseur-accumulateur, mesurer sur le gaz d'échappement une grandeur indicatrice caractéristique de la conversion des NOₓ,
- déterminer une valeur d'état du catalyseur-accumulateur en fonction des valeurs de mesure de la grandeur indicatrice du gaz d'échappement,
- faire délivrer la valeur d'état par des interfaces de diagnostic et
- délivrer la valeur d'état.

2. Procédé selon la revendication 1, **caractérisé en ce que** l'alimentation en NOₓ du catalyseur-accumulateur est déterminée à partir d'un champ de caractéristiques dont les grandeurs d'entrée sont la vitesse de rotation du moteur et la charge de moteur.

3. Procédé selon les revendications 1 ou 2, **caractérisé en ce que** l'alimentation du catalyseur-accumulateur, dont la valeur de lambda est < 1, est interrompue au plus tard lorsque des NOₓ arrivent en aval du catalyseur-accumulateur.

4. Procédé selon au moins l'une des revendications précédentes, **caractérisé en ce qu'**on règle l'état de référence en NOₓ avant de délivrer au catalyseur-accumulateur le débit massique prédéterminé de NOₓ.

5. Procédé selon au moins l'une des revendications 1 à 3, **caractérisé en ce qu'**on règle l'état de référence en NOₓ après avoir délivré au catalyseur-accumulateur un débit massique prédéterminé de NOₓ.

6. Procédé selon au moins l'une des revendications précédentes, **caractérisé en ce que**, pendant la phase de fonctionnement en conditions pauvres, on fait fonctionner le moteur à combustion selon un profil prédéterminé de paramètres de fonctionnement qui comprennent au moins l'un des paramètres suivants : la position à tout instant du clapet d'étranglement, le taux de réintroduction de gaz d'échappement à tout instant, les instants d'inflammation, d'injection principale et de postinjection, la pression d'injection, éventuellement la position du clapet de tourbillonnage, la pression de suralimentation, le synchroniseur de l'arbre à cames, la vitesse de rotation, la position de la pédale d'accélérateur, la charge et la vitesse de roulage.

7. Procédé selon la revendication 6, **caractérisé en ce que** les valeurs du profil prédéfini de paramètres de fonctionnement correspondent essentiellement à celles d'un fonctionnement normal du véhicule.

8. Procédé selon au moins l'une des revendications précédentes, **caractérisé en ce que** l'on met fin à la phase de fonctionnement en conditions pauvres après la fin d'un intervalle de temps de chargement du catalyseur-accumulateur en NOₓ.

9. Procédé selon la revendication 8, **caractérisé en ce que** l'intervalle de temps de chargement est défini comme durée de chargement fixe et prédéterminée.

10. Procédé selon la revendication 9, **caractérisé en ce qu'**on sélectionne l'intervalle de temps de chargement en NOₓ en fonction de la valeur de la concentration en NOₓ en aval du catalyseur-accumulateur.

11. Procédé selon au moins l'une des revendications précédentes, **caractérisé en ce que** la grandeur indicatrice du gaz d'échappement sélectionnée est la valeur de lambda ou la concentration en NOₓ en aval du catalyseur-accumulateur.

12. Procédé selon au moins l'une des revendications précédentes, **caractérisé en ce qu'**on détermine l'état de référence en NOₓ en fonction de l'émission brute de NOₓ et de la quantité de NOₓ emmagasinée dans le catalyseur-accumulateur.

13. Procédé selon au moins l'une des revendications précédentes, **caractérisé en ce que** pour tenir compte d'une contamination au soufre du catalyseur, on règle un état de référence en SOₓ à une valeur de lambda < 1 et à une température de désulfatation T de préférence > 550 degrés Celsius.

14. Procédé selon au moins l'une des revendications précédentes, **caractérisé en ce que** les étapes du diagnostic sont exécutées comme diagnostic embarqué et au moyen de procédures conservées dans un appareil de commande de moteur.

15. Dispositif pour exécuter un diagnostic d'un catalyseur-accumulateur de NOₓ agencé dans le canal de gaz d'échappement du moteur à combustion d'un véhicule pendant que le véhicule est à l'arrêt, **caractérisé en ce que** l'on prévoit un dispositif de test qui présente des moyens pour
- établir la température de catalyseur à une valeur située dans une plage représentative de l'accumulation de NOₓ,
- établir un état de référence en NOₓ du catalyseur-accumulateur pour mesurer la conversion des NOₓ en conditions pauvres, le catalyseur-accumulateur étant au moins temporairement alimenté en gaz d'échappement dont la valeur lambda prédéfinie est < 1, de préférence lambda < 0,9 et de façon particulièrement préférée entre 0,7 et 0,8,
- délivrer au catalyseur-accumulateur de NOₓ du gaz d'échappement à un débit massique en NOₓ supérieur à un seuil prédéfini,
- exécuter une phase de fonctionnement en conditions pauvres,
- au moyen d'un détecteur agencé en aval du catalyseur-accumulateur, mesurer sur le gaz d'échappement une grandeur indicatrice caractéristique de la conversion des NOₓ,
- déterminer une valeur d'état du catalyseur-accumulateur en fonction des valeurs de mesure de la grandeur indicatrice du gaz d'échappement,
- faire délivrer la valeur d'état par des interfaces de diagnostic.

16. Procédé selon la revendication 15, **caractérisé en ce que** le dispositif de test est un sous-système de la commande du moteur à combustion.

17. Dispositif selon les revendications 15 ou 16, **caractérisé en ce que** pour mesurer la grandeur indicatrice du gaz d'échappement, on prévoit au moins un détecteur monté en série dans le véhicule pour surveiller le fonctionnement normal.

18. Dispositif selon au moins l'une des revendications 16 à 17, **caractérisé en ce que** pour mesurer la grandeur indicatrice du gaz d'échappement, on prévoit au moins un détecteur monté en série dans le véhicule pour surveiller un fonctionnement non normal.

19. Dispositif selon au moins l'une des revendications 16 à 18, **caractérisé en ce que** pour mesurer la valeur de lambda du gaz d'échappement, on prévoit au moins une sonde lambda montée en amont du catalyseur-accumulateur et de préférence une sonde lambda binaire ou une sonde lambda à large bande.

20. Dispositif selon au moins l'une des revendications 16 à 19, **caractérisé en ce que** pour mesurer la concentration de NOₓ, on prévoit un détecteur de NOₓ en aval du catalyseur-accumulateur.
